# EUROPÄISCHE PATENTSCHRIFT

(11) **EP 2 983 895 B1**
(45) Veröffentlichungstag und Bekanntmachung des Hinweises auf die Patenterteilung: **20.12.2017**
(21) Anmeldenummer: 14716839.7
(22) Anmeldetag: 11.04.2014
(51) Int. Cl.: B29C 67/00, B22F 3/105

(54) **PULVERAUFBEREITUNGSVERFAHREN**
POWDER PROCESSING METHOD
PROCÉDÉ DE TRANSFORMATION DE POUDRE

(30) Priorität: 12.04.2013 DE 102013206542
(43) Veröffentlichungstag der Anmeldung: 17.02.2016
(73) Patentinhaber: Realizer GmbH, 33178 Borchen (DE)
(72) Erfinder: FOCKELE, Matthias, 33178 Borchen (DE)
(74) Vertreter: Tiesmeyer, Johannes
(86) Internationale Anmeldenummer: PCT/EP2014/057384
(87) Internationale Veröffentlichungsnummer: WO 2014/167100

(56) Entgegenhaltungen:
- WO-A1-2012/097794
- WO-A2-2010/083997
- DE-A1-102008 060 046

## Beschreibung

Die Erfindung betrifft ein Verfahren zum Aufbereiten von überschüssigem, wiederzuverwendendem Werkstoffpulver, welches anfällt und gesammelt wird beim Herstellen dreidimensionaler Objekte aus Werkstoffpulver, das eine gewünschte Partikelgrößenverteilung aufweist, durch schichtweises Verfestigen dieses Werkstoffpulvers an solchen Stellen der jeweiligen Schicht, welche nach Maßgabe von Geometriedaten dem gerade herzustellenden Objekt entsprechen, wobei beim Herstellen der dreidimensionalen Objekte eine Änderung der Partikelgrößenverteilung des Werkstoffpulvers auftreten kann, so dass das überschüssige Werkstoffpulver eine Partikelgrößenverteilung aufweist, welche sich von der gewünschten Partikelgrößenverteilung des ursprünglich eingesetzten Werkstoffpulvers unterscheidet.

Es wird ferner ein Verfahren vorgeschlagen zum Herstellen eines dreidimensionalen Objekts durch schichtweises Verfestigen eines Werkstoffpulvers, welches eine gewünschte Partikelgrößenverteilung aufweist, an solchen Stellen der jeweiligen Schicht, welche nach Maßgabe von Geometriedaten dem herzustellenden Objekt entsprechen, wobei überschüssiges, nicht verfestigtes Werkstoffpulver zum Wiederverwenden gesammelt wird.

Bei den meisten konventionellen Fertigungsverfahren für die Bauteilerzeugung wird der Werkstoff entweder in Formen gegossen (Urformen), mittels Werkzeugen verformt (Umformen), vom Bauteil abgetragen (Trennen) oder verschiedene Bauteile miteinander verbunden (Fügen). Demgegenüber zeichnen sich die additiven oder auch generativen Fertigungsverfahren, die oft auch als Rapid-Prototyping-Verfahren bezeichnet werden, durch einen schichtweisen Aufbau der Bauteile aus. Der Begriff Rapid Prototyping wird auch verwendet, um die schnelle Herstellung von Muster- oder Prototypen-Bauteilen durch schichtweisen Aufbau zu bezeichnen. Daneben existieren die Begriffe Rapid Tooling und Rapid Manufacturing für die schnelle Herstellung von Werkzeugen bzw. einzelner komplexer Bauteile oder Kleinserien.

Beim schichtweisen Aufbau von Gegenständen wird ein Ausgangsmaterial durch Einbringen von Energie Schicht für Schicht verfestigt. Zudem werden die einzelnen Schichten miteinander verbunden. Das Ausgangsmaterial kann in Pulverform, als Fluid oder auch als festes Material, beispielsweise drahtförmig, vorliegen. Als Energiequelle kommen beispielsweise Lasertechnologien zum Einsatz. Ausgangspunkt für das generative Fertigen eines Gegenstandes ist ein 3D-CAD-Modell, mittels welchem die Volumenkörper auf zwei Dimensionen, die einzelnen Schichten, reduziert werden.

Beim Bauprozess wird mit Hilfe einer Energiequelle die Verfestigung der Kontur und der innerhalb der Kontur liegenden Bereiche begonnen. Damit ist die Geometrie der ersten Schicht festgelegt. Im nächsten Schritt wird auf diese erste Schicht eine neue aufgetragen. Üblicherweise geschieht dies durch Absenken der Bauplattform und anschließenden Materialauftrag. Es sind aber auch andere Vorgehensweisen bekannt geworden. Bei der Verfestigung der nächsten Schicht muss die Energieeinbringung so gewählt werden, dass die aktuelle mit der darunterliegenden Schicht verbunden wird. Dieser Vorgang wiederholt sich bei jeder Schicht.

Das selektive Laserschmelzen (SLM) und das selektive Lasersintern (SLS) werden als generative Fertigungsverfahren überwiegend zum Herstellen von keramischen oder metallischen Bauteilen eingesetzt. Das Ausgangsmaterial liegt dabei in Pulverform vor. Das Pulver wird durch Laserstrahlenergie beim SLM-Verfahren lokal vollständig und beim SLS-Verfahren lokal nur teilweise aufgeschmolzen.

Beim SLM- oder SLS-Verfahren werden die Eigenschaften des Formkörpers, also etwa dessen Dichte, Genauigkeit, Oberflächenbeschaffenheit und Materialfestigkeit, neben den Prozessparametern, wie Schweißpunktbreite,

Energieeintrag und Belichtungsstrategie, auch stark von den Materialeigenschaften des verwendeten Werkstoffpulvers beeinflusst. Hier spielen neben der chemischen Zusammensetzung und der Homogenität des Werkstoffpulvers auch die Form, Größe und Größenverteilung der Pulverpartikel sowie die sich ergebende Schüttdichte des Werkstoffpulvers eine entscheidende Rolle. Ebenso beeinflussen weitere Parameter, etwa die Schichtdicke und die umgebende Gasatmosphäre, die Eigenschaften des herzustellenden Formkörpers.

Durch eine geeignete Wahl der Partikelgrößenverteilung des zu verwendenden Werkstoffpulvers können unter anderem sowohl das Fließverhalten des Pulvers als auch die Schüttdichte, Oberflächengüte und Schmelz- oder Sinterrate eingestellt werden.

Um Materialverlust zu vermeiden und damit Kosten zu sparen, wird überschüssiges, nicht verfestigtes Werkstoffpulver zumeist aufgefangen und wiederverwendet. Dabei hat sich allerdings gezeigt, dass insbesondere nach mehreren Durchgängen das übrig bleibende Pulver eine andere Partikelgrößenverteilung aufweist als das ursprüngliche Werkstoffpulver. Dies lässt sich darauf zurückführen, dass kleine Pulverpartikel im Bereich des Schmelzpunktes bevorzugt in die Schmelze übergehen und somit Entmischungseffekte auftreten. Problematisch ist hierbei, dass gleichbleibende Eigenschaften des Formkörpers nur gewährleistet werden können, wenn sich das wiederverwendete Pulver nicht oder nur geringfügig von der Zusammensetzung bzw. Partikelgrößenverteilung des ursprünglichen Werkstoffpulvers unterscheidet.

Es ist bereits üblich, das wiederzuverwendende überschüssige Pulver durch Sieben oder dgl. von größeren Schmelzpartikeln, die sich während des Schmelzverfahrens, etwa durch Schmelzspritzer, bilden können, oder von Verklumpungen zu befreien.

Es ist Aufgabe der vorliegenden Erfindung, unter Gewährleistung gleichbleibender Qualität und Eigenschaften der herzustellenden Formkörper die Kosten des Verfahrens und den dabei auftretenden Materialverlust zu verringern.

Zur Lösung dieser Aufgabe wird vorgeschlagen, Werkstoffpulver mit einer Partikelgrößenverteilung, welche sich von der Partikelgrößenverteilung des ursprünglich eingesetzten Werkstoffpulvers unterscheidet, dem überschüssigen Werkstoffpulver zugegeben wird, um die Partikelgrößenverteilung des überschüssigen Werkstoffpulvers der gewünschten Partikelgrößenverteilung des ursprünglich eingesetzten Werkstoffpulvers anzunähern.

Geringfügig auftretende Entmischungseffekte werden einen geringen Einfluss auf die Eigenschaften der nachfolgend herzustellenden Objekte haben, so dass überschüssiges und gesammeltes Werkstoffpulver auch mehrere Male zum Herstellen weiterer Formkörper bzw. Herstellungsvorgänge verwendet werden kann, ohne frisches Pulver aus dem selben Material zugeben zu müssen. Vielmehr können mehrere Herstellungsvorgänge abgewartet werden, bis die Entmischungseffekte beginnen, sich negativ auf die Qualität der Erzeugnisse auszuwirken und bis das erfindungsgemäße Verfahren zur Anwendung kommt.

Ebenso können die Werkstoffpulver mehrerer Herstellungsvorgänge zum Aufbereiten gesammelt werden, vorausgesetzt, dass sie auf Werkstoffpulver mit der gleichen anfänglichen Partikelgrößenverteilung und Zusammensetzung zurückgehen.

Bevorzugt liegen die Partikelgrößen der gewünschten Partikelgrößenverteilung des zum Herstellen der dreidimensionalen Objekte verwendeten Werkstoffpulvers unter 150 µm. Es sind Werkstoffpulver mit verschiedenen Partikelgrößenverteilungen, also verschiedenen Mittelwerten und Standardabweichungen, im Handel erhältlich - so beispielsweise Pulver mit einer mittleren Partikelgröße von 25 µm und einer Standardabweichung von 5 µm. Die gewünschte Partikelgrößenverteilung wird dabei so gewählt, dass optimale Eigenschaften des mittels des verwendeten generativen Verfahrens herzustellenden Formkörpers erreicht werden.

Der Analyse der Partikelgrößenverteilung von zuvor abgesaugtem Pulver wird üblicherweise ein Siebvorgang vorausgehen, um Agglomerate, die sich aus mehreren Partikeln zusammensetzen und gröbere Partikel vortäuschen, aus dem Pulver zu entfernen.

Die Partikelgrößenverteilung kann mit den dafür üblicherweise verwendeten Techniken bestimmt werden. Beispielsweise stellt die Laserstreuung bzw. die statische Laserbeugung eine schnelle und unkomplizierte Messmethode zur Bestimmung der Partikelgrößenverteilung dar. Es sei erwähnt, dass metallische Pulver häufig gut durch kugelförmige Partikel beschrieben werden können, so dass es möglich ist, deren Größe mit einer einzigen Dimensionszahl (Äquivalenzdurchmesser) vollständig anzugeben.

Sollten Erfahrungswerte vorliegen, zum Beispiel, dass sich nach einer gewissen Anzahl von hergestellten Formkörpern ein sich auf die Eigenschaften des Formkörpers auswirkender Mangel an manchen Partikelgrößen einstellt, kann möglicherweise auf eine Analyse des Werkstoffpulvers verzichtet werden. Ist bekannt (etwa durch mehrmaliges Anwenden des erfindungsgemäßen Verfahrens), dass in einem solchen Fall eine bestimmte Menge eines bestimmten Pulvers hinzugegeben werden muss, um die gewünschte Partikelgrößenverteilung annähernd wiederherzustellen, kann so auf einfache Weise wieder die erforderliche Qualität der Formkörper gewährleistet werden.

Beim Annähern der Partikelgrößenverteilung des wiederzuverwendenden Pulvers an die gewünschte Partikelgrößenverteilung durch Hinzufügen frischen Pulvers ist insbesondere entscheidend, dass die Häufigkeitsverteilung der einzelnen Partikelgrößen annähernd derjenigen des ursprünglichen Werkstoffpulvers entspricht. Eine exakte Wiederherstellung der ursprünglichen Partikelgrößenverteilung ist dabei nicht vorrangiges Ziel. Das bedeutet, dass die statistischen Parameter der gewünschten Partikelgrößenverteilung eine wichtige Orientierung beim Hinzufügen frischen Pulvers mit geeigneten Partikelgrößen darstellen, aber dennoch nicht genau reproduziert werden müssen, um eine gleichbleibende Qualität der Formkörper sicherstellen zu können.

Es sei betont, dass mit frischem Pulver in diesem Zusammenhang nicht das beim generativen Verfahren verwendete Werkstoffpulver mit der Soll-Partikelgrößen-Verteilung gemeint sein soll, sondern Werkstoffpulver des gleichen Materials, welches im Allgemeinen eine andere Partikelgrößenverteilung als das beim Herstellen der Formkörper eingesetzte Werkstoffpulver aufweist. Dieses wird dem beim Herstellungsprozess übrig bleibendem Werkstoffpulver zugegeben, um dieses überschüssige, überwiegend das Pulverbett bildende Werkstoffpulver wieder mit solchen Partikelgrößen anzureichern, die beim Verfestigungs- bzw. Schmelzprozess stärker als andere Partikelgrößen in die Schmelze übergehen. Hierbei ist nach der Zugabe des frischen Pulvers eine gründliche Durchmischung des Werkstoffpulvers notwendig, um ein möglichst homogenes Werkstoffpulver bereitzustellen. Eine Durchmischung des beim generativen Verfahren verwendeten Werkstoffpulvers ist grundsätzlich empfehlenswert, etwa mittels einer Rührschnecke oder dgl. im Pulverreservoir der verwendeten Maschine, z.B. SLM-Maschine. Das erfindungsgemäße Verfahren ist auf alle Materialien anwendbar, welche sich für das gewählte generative Verfahren, insbesondere für das selektive Laserschmelzen oder selektive Lasersintern, eignen.

Im Rahmen der Erfindung wird als besonders bevorzugtes generatives Verfahren das selektive Laserschmelzen angewandt. Die dazu verwendeten Vorrichtungen werden auch als SLM-Vorrichtungen bezeichnet und sind in diversen Varianten bekannt, so z. B. aus der DE 10 2011 075 748 A1, der DE 10 2004 041 633 A1, der DE 102 36 907 A1, der DE 199 05 067 A1 oder der DE 10 112 591 A1, der WO2010/083997 welche auch die Wiederverwendung von Restpulver aus der Anlage beschreibt. Eine Vorrichtung, bei welcher das erfindungsgemäße Verfahren eingesetzt werden kann, und das Verfahren selbst werden nachstehend unter Bezugnahme auf die Figuren näher erläutert. In grob schematischer Darstellung zeigt dabei
- Fig. 1: drei Momentaufnahmen einer Vorrichtung zum selektiven Laserschmelzen von Formkörpern,
- Fig. 2: eine Pulverabsaugglocke über dem fertiggestellten Formkörper bei unterschiedlichen Höheneinstellungen der Bauplattforms des Formkörpers und
- Fig. 3: die Partikelgrößenverteilungen der einzelnen betrachteten Werkstoffpulver in Form von Histogrammen.

Die Vorrichtung weist ein nach außen geschlossenes und mit Schutzgas gespültes Prozessraumgehäuse 2 mit einem Prozessraum 3 auf, welcher unten vom Prozessraumboden 4 und der darin integrierten Bauplattform 6 begrenzt wird. Die Bauplattform 6 ist gesteuert vertikal verstellbar, um die Schichtdicken der zu präparierenden Pulverschichten einzustellen. Oberhalb des Prozessraumgehäuses 2 befindet sich die Bestrahlungseinrichtung mit einem Laser 8, insbesondere Faserlaser, und mit einem Galvanometerscanner 10 zur gesteuerten X-Y-Ablenkung des Laserstrahls 12. Der Laserstrahl 12 durchdringt ein optisches Fenster 14 , z. B. in Form einer F-Theta-Linse, und kann auf jeden gewünschten Punkt des Baufeldes 16 auf der Bauplattform 6 gerichtet werden. Im Prozessraumboden 4 ist eine Pulverzuführungsöffnung 18 vorgesehen, durch welche hindurch von unten her Werkstoffpulver 20 in den Prozessraum 3 eingebracht wird. Die Pulverzufuhr erfolgt durch den Kanal 22, der aus einem Pulverreservoir 24 von oben her mit Werkstoffpulver 20 versorgt wird. Das Werkstoffpulver 20 sickert unter der Wirkung der Schwerkraft ggf. vibrationsunterstützt in den Kanal 22 ein und wird dort vermittels eines Schneckenförderers 26 zur Pulverzuführungsöffnung 18 im Prozessraum 3 gefördert.

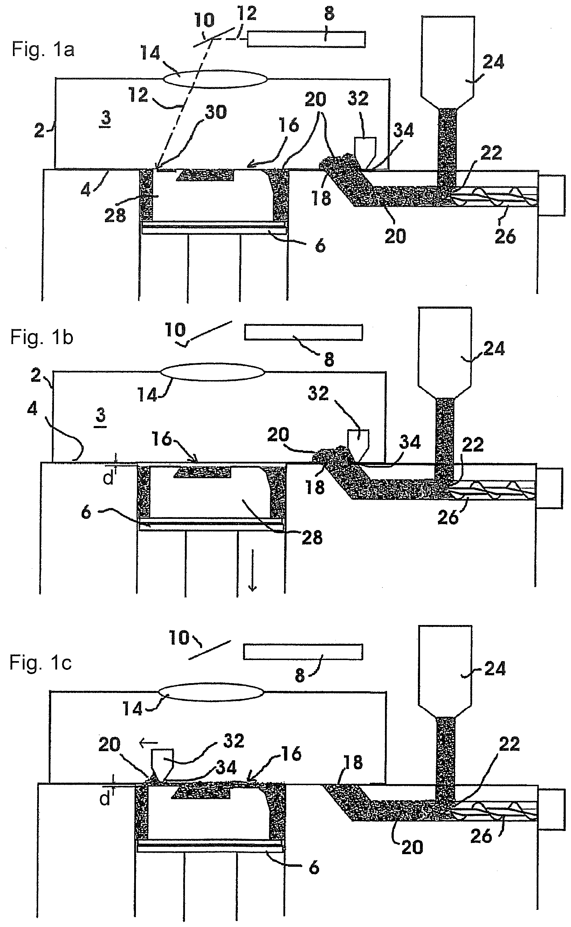

In der Momentaufnahme von Fig. 1a findet gerade der Schritt der Bestrahlung einer vorher präparierten Pulverschicht auf der Bauplattform 6 statt, um einen weiteren Bereich des schon zu einem Teil hergestellten Formkörpers 28 durch Umschmelzen von Pulver 20 zu erzeugen. Der aktuelle Schmelzvorgang findet im Bereich des Auftreffpunktes 30 des Laserstrahls 12 statt. Durch entsprechende Ablenkung des Laserstrahls 12 durch den X-Y-Scanner 10 wandert diese Schmelzzone über das Baufeld 16, bis die betreffende Schicht des herzustellenden Formkörpers 28 fertiggestellt ist.

Fig. 1b zeigt eine Momentaufnahme, gemäß welcher der in Fig. 1 a angedeutete Bestrahlungsvorgang der zuletzt bearbeitenden Werkstoffpulverschicht abgeschlossen ist. Die Bauplattform 6 ist um das Maß der Schichtdicke d abgesenkt worden, so dass nunmehr Platz für eine nächste Werkstoffpulverschicht auf der Bauplattform 6 vorliegt. Das dazu erforderliche Pulvermaterial liegt bereits im Prozessraum 3 oberhalb der Pulverzuführungsöffnung 18 und kann nun mit einem Abstreifwerkzeug 32, dessen horizontaler unterer Rand 34 auf dem nicht absenkbaren Teil des Prozessraumbodens 4 aufliegt, zum Baufeld 16 hin vorgeschoben und dort zu einer neuen Werkstoffpulverschicht nivelliert werden, wie dies in der Momentaufnahme gemäß Fig. 1 c angedeutet ist.

In Fig. 1c hat das Abstreifwerkzeug 32 bereits den größten Teil des Baufeldes 16 auf dem Bauplattform neu beschichtet. Nach Fertigstellung der Werkstoffpulverschicht kann das Abstreifwerkzeug 32 wieder in die Ursprungslage gemäß Fig. 1a und Fig. 1b zurückbewegt werden. Hierzu kann es ggf. auch zwischenzeitlich angehoben werden. Danach erfolgt der nächste Bestrahlungsschritt in der in Fig. 1a angedeuteten Weise. Währenddessen kann der Schneckenförderer 26 schon wieder die nächste Pulverration in den Prozessraum 3 fördern.

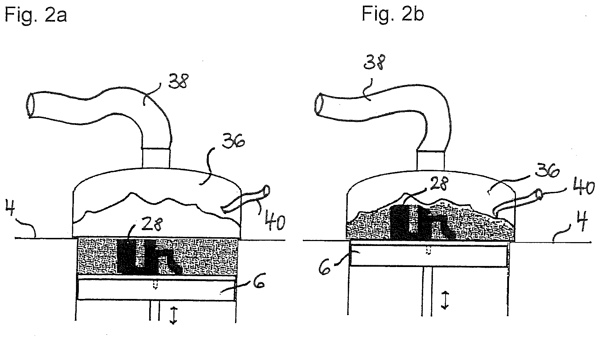

Wie in Fig. 2a und 2b schematisch gezeigt, wird nach Fertigstellung eines Formkörpers 28 eine Pulverabsaugglocke 36 über die Bauplattform 6 gestülpt. Die Pulverabsaugglocke 36 ist teilweise aufgebrochen dargestellt, um das Innenvolumen erkennbar zu machen. In Fig. 2a befindet sich die Bauplattform 6 noch in einem abgesenkten Zustand, in dem die zuletzt präparierte Pulverschicht im Wesentlichen bündig mit dem Prozessraumboden 4 liegt. In Fig. 2b ist der Bauplattform 6 in einem angehobenen Zustand gezeigt, wobei das darauf liegende Pulver und der aufgebaute Formkörper 28 in dem Innenvolumen der Saugglocke 36 aufgenommen sind. Das den Formkörper 28 außen umgebende überschüssige Pulver kann so effizient abgesaugt werden. Dies erfolgt über die Absaugleitung 38, die an einer Absaugpumpe angeschlossen ist. Das abgesaugte Pulver gelangt in eine Siebvorrichtung. Das gesiebte Pulver gelangt dann in einen Vorratsbehälter zur Wiederverwendung. Mit 40 ist in Fig. 2a, 2b eine schematisch angedeutete Gaszuführleitung bezeichnet, mittels welcher Gas zur Auflockerung des abzusaugenden Pulvers in die Saugglocke 36 einblasbar ist. Die Leitungen 38, 40 können Elemente eines Schutzgaskreislaufs sein, der auch eine abgesaugtes Pulver von dem Absaugschutzgas trennende Filtereinrichtung enthält. Die Auflockerung des Pulvers kann ebenso mittels einer Vibrations- oder Ultraschalleinrichtung erfolgen. Nach dem Absaugvorgang sollte der hergestellte Formkörper von überschüssigem Pulver an seiner Außenseite weitestgehend befreit sein.

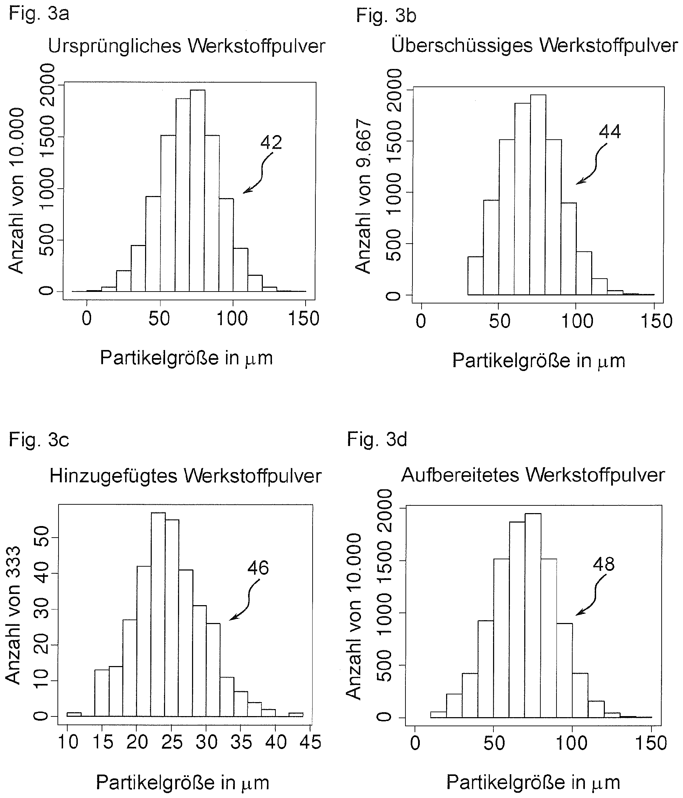

Anhand von Fig. 3 wird nun das Grundprinzip des erfindungsgemäßen Verfahrens erläutert. Dieses Beispiel dient hauptsächlich dem Zweck, eine mögliche Vorgehensweise beim Verfahren gemäß der Erfindung mit Hilfe einer vorgegebenen Partikelgrößenverteilung 42 anschaulich darzustellen. Fig. 3a zeigt die (fiktive) Partikelgrößenverteilung 42 des ursprünglichen Werkstoffpulvers. Es soll angenommen werden, dass diese Partikelgrößenverteilung der gewünschten Partikelgrößenverteilung 42 entspricht, welche für den jeweils herzustellenden Formkörper 28 für das Erreichen optimaler Eigenschaften gewählt wurde. Hier ist ein Werkstoffpulver 20 mit 10.000 Pulverpartikeln simuliert worden, wobei eine Normalverteilung mit einer mittleren Partikelgröße von 70 µm und einer Standardabweichung von 20 µm vorgegeben wurde. Fig. 3b zeigt die (hypothetische) Partikelgrößenverteilung 44 des Werkstoffpulvers 20, nachdem der Herstellungsprozess eines oder mehrerer Formkörper 28 abgeschlossen ist. Dieses Werkstoffpulver kann also bereits mehrfach wiederverwendet worden sein, ohne dass das erfindungsgemäße Verfahren angewendet wurde. Aus Fig. 3b geht hervor, dass es dem überschüssigen Werkstoffpulver des Pulverbetts an den kleinen Partikelgrößen mangelt. Fig. 3b zeigt den Extremfall, dass alle kleinen Partikel ab einer gewissen Partikelgröße aufgrund von Entmischungseffekten dem ursprünglichen Werkstoffpulver 20 fehlen. Genauer gesagt, wurden im gezeigten Beispielsfall aus der ursprünglichen Partikelgrößenverteilung 42 die 333 kleinsten Partikelgrößen entfernt. Von diesen 333 kleinsten Partikelgrößen wurde der Mittelwert berechnet, der bei etwas weniger als 25 µm liegt. Im Experiment muss dieser Mittelwert beispielsweise anhand eines Vergleichs der ursprünglichen Partikelgrößenverteilung 42 mit der sich nach dem Herstellungsvorgang einstellenden Partikelgrößenverteilung 44 geschätzt werden. Die mittlere Partikelgröße von ungefähr 25 µm kann als der Mittelwert der Partikelgrößenverteilung 46 des hinzuzufügenden Werkstoffpulvers des gleichen Materials gewählt werden. Fig. 3c zeigt eine solche Partikelgrößenverteilung 46 von frischem Werkstoffpulver mit dieser mittleren Partikelgröße von etwa 25 µm und einer Standardabweichung von 5 µm. Vermischt man nun das überschüssige Werkstoffpulver aus Fig. 3b und das frische Werkstoffpulver aus Fig. 3c, so dass eine neue homogene Mischung entsteht, erhält man Werkstoffpulver mit der in Fig. 3d dargestellten Partikelgrößenverteilung 48. Ein Vergleich von Fig. 3a und Fig. 3d zeigt, dass sich die Partikelgrößenverteilung 44 des überschüssigen Werkstoffpulvers der gewünschten Partikelgrößenverteilung 42 des ursprünglichen Werkstoffpulvers durch die Zugabe von frischem Werkstoffpulver mit kleinen Partikelgrößen angenähert hat. Das so aufbereitete Werkstoffpulver kann folglich wiederverwendet werden, ohne dass die Qualität des herzustellenden Formkörpers 28 leidet.

## Patentansprüche

1. Verfahren zum Aufbereiten von überschüssigem, wiederzuverwendendem Werkstoffpulver, welches anfällt und gesammelt wird beim Herstellen dreidimensionaler Objekte (28) aus Werkstoffpulver (20), das eine gewünschte Partikelgrößenverteilung (42) aufweist, durch schichtweises Verfestigen dieses Werkstoffpulvers (20) an solchen Stellen der jeweiligen Schicht, welche nach Maßgabe von Geometriedaten dem gerade herzustellenden Objekt (28) entsprechen, wobei beim Herstellen der dreidimensionalen Objekte (28) eine Änderung der Partikelgrößenverteilung (42) des Werkstoffpulvers (20) auftreten kann, so dass das überschüssige Werkstoffpulver eine Partikelgrößenverteilung (44) aufweist, welche sich von der gewünschten Partikelgrößenverteilung (42) des ursprünglich eingesetzten Werkstoffpulvers (20) unterscheidet, **dadurch gekennzeichnet, dass** Werkstoffpulver mit einer Partikelgrößenverteilung (46), welche sich von der Partikelgrößenverteilung (42) des ursprünglich eingesetzten Werkstoffpulvers (20) unterscheidet, dem überschüssigen Werkstoffpulver (44) zugegeben wird, um die Partikelgrößenverteilung (44) des überschüssigen Werkstoffpulvers der gewünschten Partikelgrößenverteilung (42) des ursprünglich eingesetzten Werkstoffpulvers (20) anzunähern.

2. Verfahren nach Anspruch 1, wobei überschüssiges Werkstoffpulver mehrerer Herstellungsvorgänge zur Aufbereitung gesammelt wird.

3. Verfahren nach Anspruch 1 oder 2, wobei das überschüssige Werkstoffpulver einem Siebvorgang unterzogen wird.

4. Verfahren nach einem der vorhergehenden Ansprüche, wobei die Partikelgrößenverteilung (44) des überschüssigen Werkstoffpulvers einer Analyse unterzogen wird.

5. Verfahren nach Anspruch 4, wobei die Analyse der Partikelgrößenverteilung (44) des überschüssigen Werkstoffpulvers mittels Laserbeugung erfolgt.

6. Verfahren zum Herstellen eines dreidimensionalen Objekts (28) durch schichtweises Verfestigen eines Werkstoffpulvers (20), welches eine gewünschte Partikelgrößenverteilung (42) aufweist, an solchen Stellen der jeweiligen Schicht, welche nach Maßgabe von Geometriedaten dem herzustellenden Objekt (28) entsprechen, wobei überschüssiges, nicht verfestigtes Werkstoffpulver zum Wiederverwenden gesammelt wird und gemäß einem Verfahren nach einem der Ansprüche 1 bis 5 aufbereitet wird

7. Verfahren nach Anspruch 6, wobei die Partikelgrößenverteilung (44) des wiederzuverwendenden Werkstoffpulvers einer Analyse und einem anschließenden Vergleich mit der gewünschten Partikelgrößenverteilung (42) unterzogen wird, um die Partikelgrößenverteilung (44) des wiederzuverwendenden Werkstoffpulvers durch Hinzufügen von Werkstoffpulver mit einer von der gewünschten Partikelgrößenverteilung (42) abweichenden Partikelgrößenverteilung (46) der gewünschten Partikelgrößenverteilung (42) anzunähern.

8. Verfahren nach Anspruch 7, wobei der Analyse der Partikelgrößenverteilung (44) des überschüssigen Werkstoffpulvers ein Siebvorgang vorausgeht.

9. Verfahren nach einem der Ansprüche 7 bis 8, wobei die Analyse des überschüssigen Werkstoffpulvers erst nach mehreren Herstellungs- und Werkstoffpulversammelvorgängen erfolgt.

10. Verfahren nach einem der Ansprüche 7 bis 9, wobei die Zugabe von Werkstoffpulver mit einer von der gewünschten Partikelgrößenverteilung (42) abweichenden Partikelgrößenverteilung (46) erst nach mehreren Herstellungs- und Werkstoffpulversammelvorgängen erfolgt.

## Claims

1. Method for processing excess material powder to be reused, which powder accumulates and is collected during the production of three-dimensional objects (28) from material powder (20), that has a desired particle size distribution (42), by compacting said material powder (20) in layers at the locations of the layer in question that correspond, according to geometry data, to the object (28) that is currently to be produced, it being possible for a change in the particle size distribution (42) of the material powder (20) to occur during production of the three-dimensional objects (28), with the result that the excess material powder has a particle size distribution (44) that differs from the desired particle size distribution (42) of the material powder (20) originally used, **characterised in that** material powder having a particle size distribution (46) that differs from the particle size distribution (42) of the material powder (20) originally used is added to the excess material powder (44) in order to bring the particle size distribution (44) of the excess material powder close to the desired particle size distribution (42) of the material powder (20) originally used.

2. Method according to claim 1, wherein excess material powder of a plurality of production operations is collected for processing.

3. Method according to either claim 1 or claim 2, wherein the excess material powder undergoes a sieving operation.

4. Method according to any of the preceding claims, wherein the particle size distribution (44) of the excess material powder is analysed.

5. Method according to claim 4, wherein the particle size distribution (44) of the excess material powder is analysed by means of laser diffraction.

6. Method for producing a three-dimensional object (28) by means of compacting, in layers, a material powder (20), having a desired particle size distribution (42), at the locations of the layer in question that correspond, according to geometry data, to the object (28) to be produced, wherein excess, uncompacted material powder is collected in order to be reused and is processed according to a method according to any of claims 1 to 5.

7. Method according to claim 6, wherein the particle size distribution (44) of the material powder to be reused is analysed and subsequently compared to the desired particle size distribution (42) in order to bring the particle size distribution (44) of the material powder to be reused close to the desired particle size distribution (42) by adding material powder having a particle size distribution (46) that differs from the desired particle size distribution (42).

8. Method according to claim 7, wherein the analysis of the particle size distribution (44) of the excess material powder is preceded by a sieving operation.

9. Method according to either claim 7 or claim 8, wherein the excess material powder is analysed only after a plurality of production and material powder collection operations.

10. Method according to any of claims 7 to 9, wherein material powder having a particle size distribution (46) that differs from the desired particle size distribution (42) is added only after a plurality of production and material powder collection operations.

## Revendications

1. Procédé servant à préparer un matériau pulvérulent excédentaire réutilisable, qui apparaît et est collecté lors de la fabrication d'objets (28) tridimensionnels à partir de matériau pulvérulent (20), qui présente une granulométrie (42) souhaitée, par solidification par couches dudit matériau pulvérulent (20) au niveau de tels emplacements de la couche respective qui correspondent à l'objet (28) précisément à fabriquer conformément à des données géométriques, dans lequel une modification de la granulométrie (42) du matériau pulvérulent (20) peut se produire lors de la fabrication des objets (28) tridimensionnels de sorte que le matériau pulvérulent excédentaire présente une granulométrie (44), qui se distingue de la granulométrie (42) souhaitée du matériau pulvérulent (20) employé initialement, **caractérisé en ce que** du matériau pulvérulent avec une granulométrie (46) qui se distingue de la granulométrie (42) du matériau pulvérulent (20) employé initialement est ajouté au matériau pulvérulent (44) excédentaire, afin que la granulométrie (44) du matériau pulvérulent excédentaire approche la granulométrie (42) souhaitée du matériau pulvérulent (20) employé initialement.

2. Procédé selon la revendication 1, dans lequel du matériau pulvérulent excédentaire de plusieurs opérations de fabrication est collecté aux fins de la préparation.

3. Procédé selon la revendication 1 ou 2, dans lequel le matériau pulvérulent excédentaire est soumis à une opération de criblage.

4. Procédé selon l'une quelconque des revendications précédentes, dans lequel la granulométrie (44) du matériau pulvérulent excédentaire est soumise à une analyse.

5. Procédé selon la revendication 4, dans lequel l'analyse de la granulométrie (44) du matériau pulvérulent excédentaire est effectuée au moyen d'une diffraction laser.

6. Procédé servant à fabriquer un objet (28) tridimensionnel par solidification par couches d'un matériau pulvérulent (20), qui présente une granulométrie (42) souhaitée, au niveau de tels emplacements de la couche respective qui correspondent à l'objet (28) à fabriquer conformément aux données géométriques, dans lequel un matériau pulvérulent excédentaire, non solidifié est collecté aux fins de la réutilisation et est préparé selon un procédé selon l'une quelconque des revendications 1 à 5.

7. Procédé selon la revendication 6, dans lequel la granulométrie (44) du matériau pulvérulent réutilisable est soumise à une analyse et à une comparaison qui suit immédiatement après à la granulométrie (42) souhaitée afin que la granulométrie (44) du matériau pulvérulent à réutiliser approche la granulométrie (42) souhaitée en ajoutant du matériau pulvérulent avec une granulométrie (46) s'écartant de la granulométrie (42) souhaitée.

8. Procédé selon la revendication 7, dans lequel une opération de criblage précède l'analyse de la granulométrie (44) du matériau pulvérulent excédentaire.

9. Procédé selon l'une quelconque des revendications 7 à 8, dans lequel l'analyse du matériau pulvérulent excédentaire est effectuée seulement après plusieurs opérations de fabrication et de collecte de matériau pulvérulent.

10. Procédé selon l'une quelconque des revendications 7 à 9, dans lequel l'ajout d'un matériau pulvérulent avec une granulométrie (46) s'écartant de la granulométrie (42) souhaitée est effectué seulement après plusieurs opérations de fabrication et de collecte de matériau pulvérulent.
